# EUROPÄISCHE PATENTSCHRIFT

(11) **EP 3 235 681 B1**
(45) Veröffentlichungstag und Bekanntmachung des Hinweises auf die Patenterteilung: **19.02.2020**
(21) Anmeldenummer: 17000533.4
(22) Anmeldetag: 31.03.2017
(51) Int. Cl.: B60P 3/035, B60P 7/12

(54) **NUTZFAHRZEUGAUFBAU MIT LADUNGSSICHERUNG FÜR INSBESONDERE COILS**
COMMERCIAL VEHICLE STRUCTURE WITH LOAD SECURING FOR COILS IN PARTICULAR
STRUCTURE DE VÉHICULE UTILITAIRE AVEC SÉCURISATION DE CHARGE POUR ENTRE AUTRES DES BOBINES

(30) Priorität: 18.04.2016 DE 102016004494
(43) Veröffentlichungstag der Anmeldung: 25.10.2017
(73) Patentinhaber: Fahrzeugwerk Bernard Krone GmbH & Co. KG, 49757 Werlte (DE)
(72) Erfinder: BENTEN, Matthias, 49751 Sögel (DE); PERK, Thorsten, 26901 Lorup (DE); HORST, Krallmann, 49716 Meppen (DE)
(74) Vertreter: Pott, Ulrich

(56) Entgegenhaltungen:
- AT-U1- 5 619
- DE-B4- 10 312 638
- DE-B4-102008 011 704
- US-B1- 8 672 594

## Beschreibung

Die Erfindung bezieht sich auf einen Nutzfahrzeugaufbau in einer Ausbildung nach dem Oberbegriff des Patentanspruches 1.

Das Sichern von Coils und Spaltbändern auf Nutzfahrzeugaufbauten erweist sich im Hinblick auf die vorzunehmende Ladungssicherung als schwierig. Spaltbänder neigen bei Längsbeschleunigungen dazu, nach vorne wegzukippen. Durch mehrfaches Beschleunigen und Abbremsen des Nutzfahrzeuges können trotz einer vorgesehenen Ladungssicherung, die sich z.B. vor und hinter der Ladung befindet, und auch bei Vorsehen von Verzurrmitteln Freiräume entstehen. Solche Freiräume erhöhen den Bewegungsspielraum einzelner Spaltbänder. Durch Einbremsen eines Nutzfahrzeuges können dann einzelne Spaltbänder nacheinander nachvorne kippen und stoßen gegeneinander, wodurch zusätzlich hohe Kräfte entstehen, welche mit der Ladungssicherung aufgefangen werden müssen. Es sind daher an die Ladungssicherung hohe Anforderungen zu stellen.

Ein Nutzfahrzeugaufbau mit einer Ladungssicherung für Coils, Spaltbänder und dergleichen Ladegut ist aus der DE 10 2008 011 704 B4 bekannt. Dort ist in den Ladeboden eine Coilmulde eingelassen und in seitlichen Begrenzungen des Ladebodens sind seitliche Befestigungsöffnungen eingelassen. In Längsrichtung des Nutzfahrzeugaufbaus sind in den Ladenraumboden zwei Befestigungslängsträger mit Abstand zu den äußeren Begrenzungen des Ladebodens vorgesehen, und zwar einwärts versetzt zur Längsmittelachse des Fahrzeugaufbaus. Diese Längsträger sind durch quer zur Längsmittelachse angeordnete Stützbalken zu verbinden, wobei die Stützbalken an gegenüber liegenden Stirnflächen eines in der Coilmulde angeordneten Coils vorgesehen sind. Die Stützbalken sind über sich einander kreuzende Verzurrmittel an den Befestigungsöffnungen der seitlichen Begrenzungen gegeneinander und mithin gegen die Stirnflächen des zu transportierenden Coils zu verspannen.

Die beiden Stützbalken weisen Taschen zur Aufnahme von aufrecht stehenden Einsteckrungen auf. Diese Einsteckrungen können über Verzurrmittel an den Befestigungsaufnahmen der seitlichen Begrenzungen des Ladebodens befestigt werden, so dass die Einsteckrungen auch wiederum gegen die Stirnflächen eines zu transportierenden Coils aufgrund der Spannkraft der Verzurrmittel drücken.

Nachteilig hierbei ist, dass durch die beiden Stützbalken und die Spannseile als Verzurrmittel ein Coil zwar variabel auf dem Ladeboden anzuordnen und zu verspannen ist, jedoch kann über die zu verspannenden Spannseile, die allein die Stützbalken zu verspannen haben, eine auch für schwere Coils taugliche Ladungssicherung nicht dargestellt werden. Zudem sind zwingend zwei Stützbalken erforderlich, die entsprechend sicher über die Spannseile mit den seitlichen Begrenzungen des Laderaumes zu verspannen sind. Dies erfordert zeitaufwändige und kraftraubende Verzurrungen und Spannarbeiten.

Aus der DE 103 12 638 B4 ist ein Nutzfahrzeugaufbau der eingangs genannten Art bekannt. Dieser Fahrzeugaufbau weist eine Coilmulde auf mit einem jeweiligen Stützbalken, der in Rasteraufnahmen einer Rasterschiene festgelegt werden kann. Um das Transportgut zusätzlich zu sichern und den Stützbalken sicher in den Aufnahmen zu halten, sind Spanngurte vorgesehen, die jedoch vielfach den Anforderungen in der Praxis nicht genügen können.

Aus dem AT 005 619 U1 ist ein Lastfahrzeug zum Transportieren von Blechbunden, insbesondere von Spaltbändern bekannt, die an aufrechten Stützrungen abgestützt werden, die über eine diagonale Strebe abzustützen sind. Die Stützrungen sind über Sicherungsbolzen in Aufnahmetaschen des Fahrzeugaufbaus festgelegt und mithin an fest vorgesehenen Stellen des Fahrzeugaufbaus vorzusehen. Dies ist ebenfalls nachteilig und steht einer möglichst flexiblen Nutzung einer Ladefläche eines Fahrzeugaufbaus entgegen.

Es ist Aufgabe der vorliegenden Erfindung, einen Nutzfahrzeugaufbau der eingangs genannten Art dahingehend weiterzubilden, dass eine auch höheren Lasten gerecht werdende Ladungssicherung bei einem Nutzfahrzeug darzustellen ist, mit der auch schwere Coils, Spaltbänder und dergleichen Ladegut zu transportieren sind. Zudem soll die Beladung und die Ladungssicherung in technisch einfacher Weise an einer gewünschten optimalen Stelle des Ladebodens platziert werden können.

Zur Lösung dieser Aufgabe zeichnet der Nutzfahrzeugaufbau der eingangs genannten Art durch die im Patentanspruch 1 angegebenen Merkmale aus. Hinsichtlich wesentlicher weiterer vorteilhafter Ausgestaltungen der Erfindung wird auf die Ansprüche 2 bis 9 verwiesen.

Damit ist ein Nutzfahrzeugaufbau mit einer Ladungssicherungsanordnung für Coils, Spaltbänder und dergleichen Ladegut zur Verfügung gestellt, bei dem zunächst eine große Stützkraft zur Gewährleistung einer hohen Ladungssicherungskraft über in die in den Ladeboden eingelassenen Rasterschienen mit den Rasteraufnahmen und dem Stützbalken mit seinen Befestigungsansätzen aufgenommen wird. Aufgrund der hohen Kräfte, die über die Rasterschienen mit den Rasteraufnahmen und den in Fahrtrichtung des Nutzfahrzeuges vor dem zu sichernden Ladegut, also z.B. dem angeordneten Stützbalken aufzufangen sind, sind außerordentlich hohe Kräfte aufzufangen. Die Ladung und die Ladungssicherung kann an der Stelle des Ladebodens platziert werden, die im Hinblick auf eine optimale Schwerpunktlage zu favorisieren ist. Daran wird der Stützbalken an der Stelle mit der Rastschiene verbunden, die dieser Lage am besten entspricht. Zudem sind in diesen Stützbalken die aufragenden Einsteckrungen einzustecken, die sich entlang der Stirnfläche des Coils oder dergleichen Ladegut nach oben erstrecken und so einem Kippen des Coils bei Bremsvorgängen vorbeugen. Durch die zusätzlichen Stützstreben, die an jeder Einsteckrungen angreifen, und bevorzugt in einem Bereich mit der Einsteckrunge verbunden sind, der sich im oberen Bereich eines zu sichernden Ladegutes befindet, und die sich dann wiederum ebenfalls in den Rasterschienen und deren Rasteraufnahmen abstützen, kann Kippbewegungen sicher vorgebeugt werden. Damit ist mit nur einem Stützbalken und den beiden Stützstreben in Zusammenwirken mit den Rasterschienen und den Rasteraufnahmen ein hohes Maß an Ladungssicherheit mit nur wenigen und daher kostengünstigen Bauteilen zu vollziehen.

Besonders bevorzugt wird, wenn zusätzlich auch noch Verzurrmittel eingesetzt werden. Dabei werden bevorzugt Zurrketten eingesetzt und nicht etwa nur Zurrseile. Eine besonders gute Art der Verzurrung kann erreicht werden, wenn in Fahrtrichtung abgewandt, also an einer hinteren Stirnfläche eines Coils oder dergleichen Ladegut, eine Stütztraverse angebracht wird, die sich beispielsweise in einem mittleren Bereich einer Stirnfläche des zu sichernden Coils befindet. Da Coils in aller Regel einen Coilauge haben, kann durch dieses Coilauge - ausgehend von der Stütztraverse -ein Verzurrmittel, beispielsweise die Verzurrkette, geführt werden, bis es an die in Fahrtrichtung weisende Stirnfläche des Coils gelangt. Dort kann ein Verbindungsglied beispielsweise in Gestalt eines Verbindungsringes vorgesehen sein, das mit der Verzurrkette als Verzurrmittel verbunden ist. An diesem Ring können dann zwei weitere Verzurrmittel, beispielsweise zwei weitere Verzurrketten angreifen, die über die jeweilige Stirnfläche des Coils, die nach vorne weist, geführt sein und dann nach Erreichen des Außenumfanges so schräg nach hinten, d.h. gegen die Fahrtrichtung, geführt sein, dass sie in einer Befestigungsaufnahme einer seitlichen Begrenzung des Ladebodens befestigt werden kann, so dass dadurch die hintere Stütztraverse über diese Verzurrmittel in Gestalt der Verzurrketten den Coil nach vorne drückt, d.h. in Fahrtrichtung, so dass der Coil gegen den Stützbalken und nicht der Stützbalken gegen das Coil drückt. Die Einsteckrungen ihrerseits können auch noch entsprechende Taschen haben, um dort beispielsweise weitere Verzurrmittel durch die Seitenstrebe hin durchzuführen, um eine sichere Führung der weiteren Verzurrmittel an dem Ladegut dargestellt zu haben.

Der Stützbalken hat besondere Befestigungsansätze, die in die Rasteraufnahmen einzusetzen sind, so dass der Stützbalken fest mit den Rasterschienen zu verrasten ist. Um ein Herausdrehen zu verhindern, ist ein Ring an dem Befestigungsansätzen vorgesehen.

Weitere Ausgestaltungen ergeben sich aus weiteren Unteransprüchen, der Zeichnung und nachfolgenden Beschreibung. In der Zeichnung zeigen:
- Fig. 1: in einer Perspektivdarstellung ein Ausführungsbeispiel eines Nutz-fahrzeugaufbaus nach der Erfindung mit Darstellung eines geladenen Coils;
- Fig. 2: ausschnittsweise im Bereich der Coilmulde in perspektivischer Darstellung das Ausführungsbeispiel nach Fig. 1;
- Fig. 3: ausschnittsweise das Ausführungsbeispiel nach den Fig. 1 und 2 in einer Ansicht von hinten mit Darstellung der Stütztraverse;
- Fig. 4: ausschnittsweise eine Seitenansicht eines weiteren Ausführungsbeispiels des Nutzfahrzeugaufbaus mit geladenen beabstandeten Spaltbänden;
- Fig. 5: in einer perspektivischen Darstellung ein Ausführungsbeispiel eines Stützbalkens und
- Fig. 6: jeweils verschiedene Darstellungen eines Ausführungsbeispiels einer Stützstrebe mit angeflanschten Befestigungsbolzen.

In der Zeichnung sind übereinstimmende Teile mit übereinstimmenden Bezugsziffern bezeichnet.

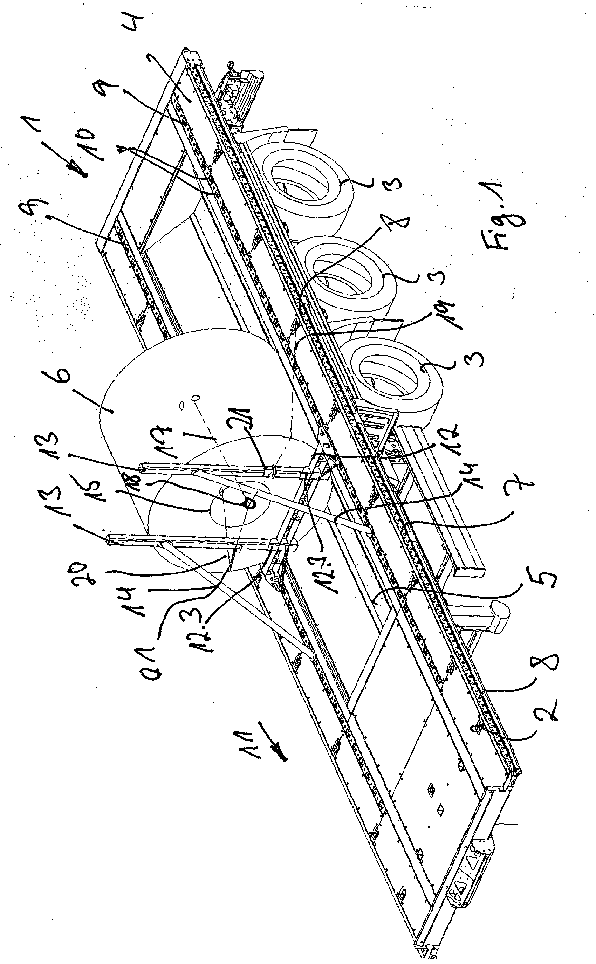

Allgemein mit 1 ist in der Zeichnung ein Nutzfahrzeugaufbau beziffert, der ein Fahrgestell 2 aufweist, das über Räder 3 auf dem Erdboden abzustützen ist. Dieser Nutzfahrzeugaufbau 1 hat einen Ladeboden 4 sowie eine Coilmulde 5, in der in dem Ausführungsbeispiel nach Fig. 1 teilweise versenkt gegenüber der ebenen Fläche des Ladebodens 4 ein Coil 6 als Ladegut angeordnet ist.

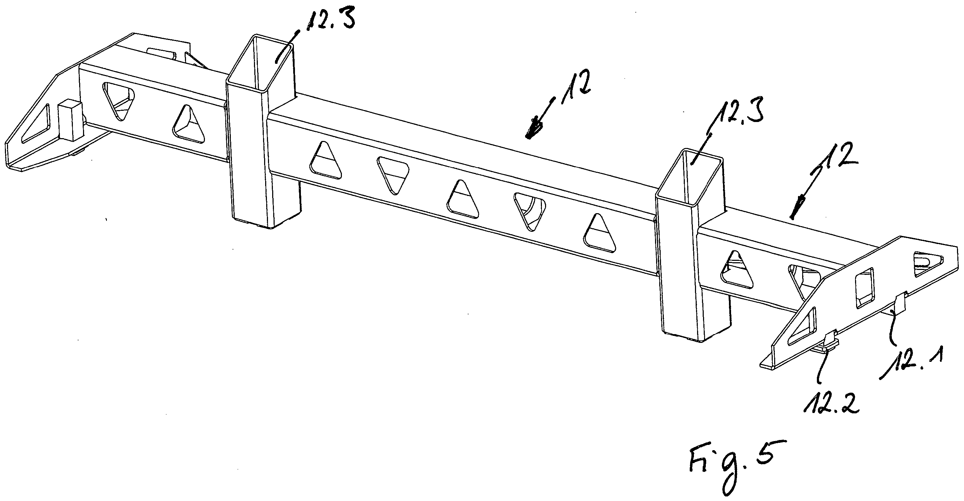

In den Seitenaußenkanten des Ladebodens 4 sind seitliche Begrenzungen 7 in Gestalt einer Metallschiene mit entsprechenden Befestigungsösen bzw. -löchern 8 vorgesehen, die einen Lageabstand zueinander aufweisen, so dass variationsreich Querbalken, Zurrösen und dergleichen dort oder über z. B. Schwerlastzurringe sicher mit dem Ladeboden 4 verbunden werden können. Seitlich versetzt nach innen, d.h. zur Längsmittelachse des Ladebodens 4 hin, sind Befestigungsschienen in Gestalt von Rasterschienen 9 vorgesehen, die fest in den Ladeboden 4 eingelassen sind. Diese haben jeweils mit Lageabstand zueinander verschiedene Rasteraufnahmen 10. Diese Rasterschienen 9 begrenzen die Coilmulde 5 mit einem gewissen Abstand, lageversetzt zu den Außenbegrenzungen 7 des Ladebodens 4. In diese Rasteraufnahmen 10 der Rasterschienen 9 ist in Fahrtrichtung 11 vor dem Coil 6 ein Stützbalken 12 eingelassen. Dieser Stützbalken 12 hat, wie auch näher aus der vergrößerten Darstellung nach Fig. 5 hervorgeht, besondere Befestigungsansätze 12.1, die in die Rasteraufnahmen 10 einzusetzen sind, so dass der Stützbalken 12 fest mit den Rasterschienen 9 zu verrasten ist. Um ein Herausdrehen zu verhindern, ist noch ein Ring 12.2 an den Befestigungsansätzen 12.1 vorgesehen.

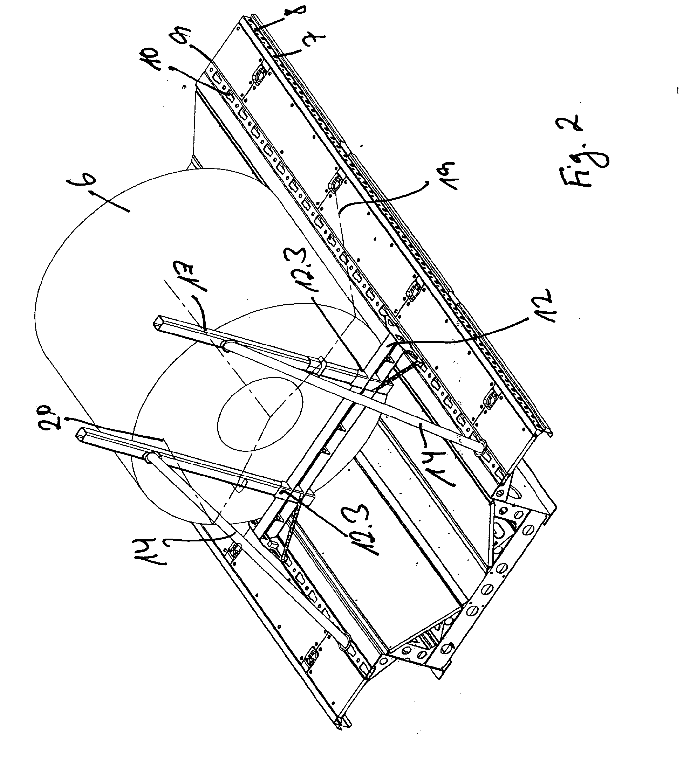

Des Weiteren hat der Stützbalken 12 Einsteckrungentaschen 12.3, in die Einsteckrungen 13 hineinzustecken sind, wie dies die Fig. 1, 2 und 4 zeigen. Diese Einsteckrungen 13 sind wiederum abzustützen über Stützstreben 14, die ihrerseits nicht nur in den Einsteckrungen 13 über eine Bolzenverbindung angreifen, sondern auch ebenfalls in den Rasteraufnahmen 10 der Rasterschienen 9 arretiert sind. Da die Einsteckrungentaschen 12.3 ein wenig einwärts versetzt sind zur Längsmittelachse des Nutzfahrzeugaufbaus und damit auch gegenüber den Rasterschienen 9, erstrecken sich die Stützstreben 14 nicht nur in Diagonalausrichtung von oben nach unten und nach vorne hin, sondern auch mit einem gewissen Maß mit einer Bewegungsausrichtung von innen nach außen.

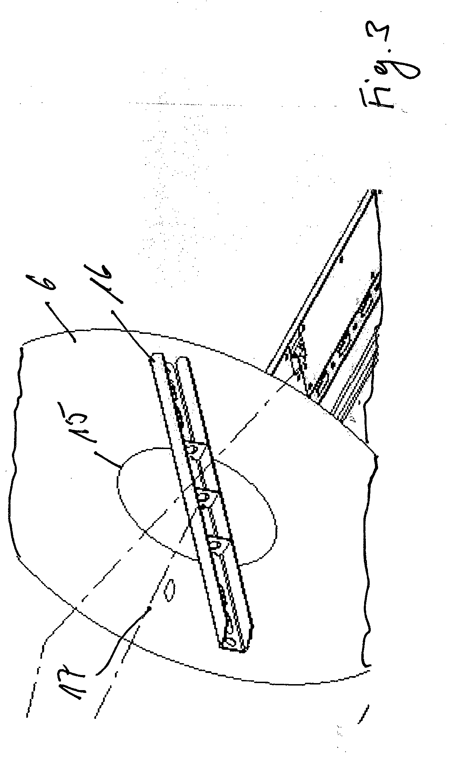

Wie bereits in Fig. 1 angedeutet, sind Verzurrmittel 17 in Gestalt von Verzurrketten vorgesehen. Eine Verzurrkette 17 erstreckt sich durch das Coilauge 15 vom Bereich der hinteren Stirnfläche des Coils 6 der Fahrtrichtung 11 abgewandt, sh. auch Fig. 3, indem dort eine Stütztraverse 16 vorgesehen ist, die sich ohne Verbindung mit dem Stützbalken 12 oder den Rasterschienen 9 hinter der Stirnfläche des Coils 6 erstreckt und dort durch das Auge 15 in Fahrtrichtung nach vorne geführt ist zu einem Verbindungsglied 18. Dieses ist als Ring ausgebildet, an dem weitere Verzurrmittel in Gestalt von Verzurrketten angreifen, nämlich zum einen die Verzurrkette 19 und zum anderen die Verzurrkette 20. Diese sind durch Führungselemente 21 an den Einsteckrungen 13 geführt, dann um die Stirnfläche des Coils 6 (vorne) geführt und dann umgelenkt gegen die Fahrtrichtung 11, so dass sowohl die in der Fig. 1 rechte Verzurrkette 19 als auch die in der Fig. 1 linke Verzurrkette 20 zu den äußeren Begrenzungen 7 geführt werden und dort an jeweils einer Befestigungsöse 8 bzw. einem Schwerlastzurring festgelegt werden können. Damit ist eine Verzurrung der hinteren Stütztraverse 16 gegen die hintere Stirnfläche des Coils 6 möglich, so dass über diese Stütztraverse 16 der Coil 6 in Fahrtrichtung 11 gegen den Stützbalken 12 und gegen die Einsteckrungen 13 und die Stützstreben 14 gespannt wird.

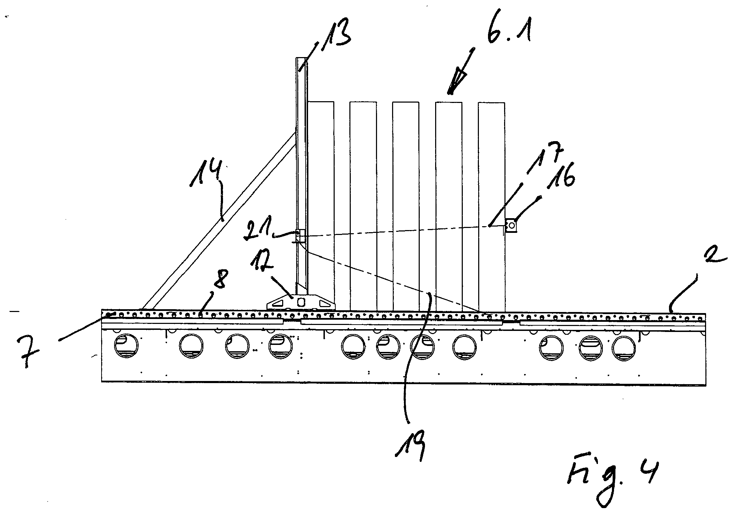

Fig. 4 zeigt anstelle eines Coils 6 beabstandete Spaltbänder 6.1.

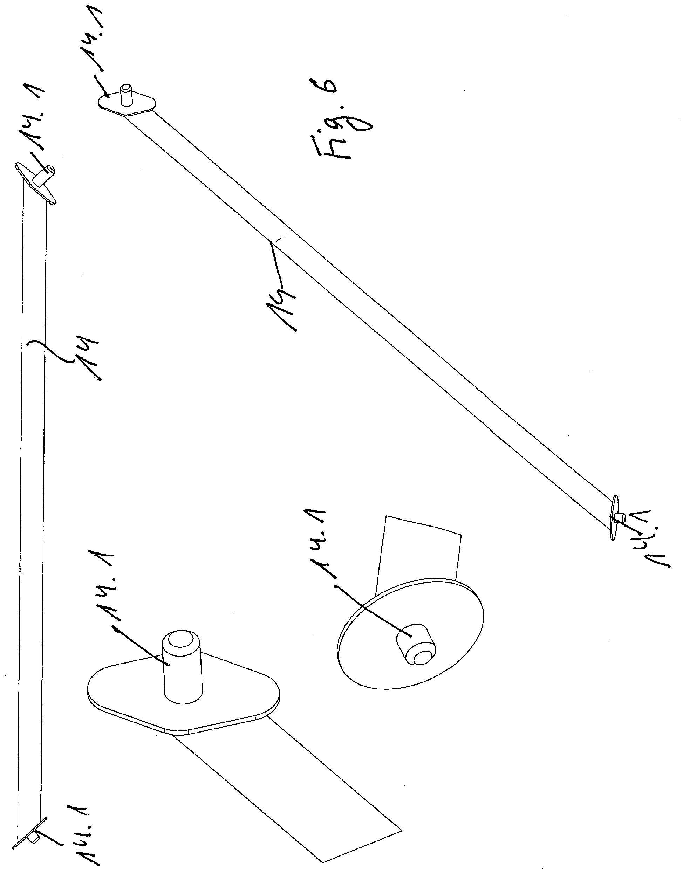

In Fig. 6 ist für die Einsteckrungen gezeigt, dass die Bolzen 14.1 sich nicht koaxial zu den Längsmittelachsen der Stützstreben 14 erstrecken, sondern abgewinkelt ausgerichtet sind, so dass sie in der Position, wie sie in Fig. 1 gezeigt ist, zum einen mit den Einsteckrungen 13 und andererseits mit den Rasterschienen 9 so zu verbinden sind, dass die Diagonalausrichtung nach vorne hin und schräg zu den jeweiligen Außenseiten mit einfachen Handgriffen zu vollziehen ist.

## Patentansprüche

1. Nutzfahrzeugaufbau (1) mit einem über ein Fahrgestell (2) auf dem Erdboden abstützbaren Ladeboden (4), der an seinen Seitenkanten jeweils eine mit Befestigungsaufnahmen (8) versehene Begrenzung (7) aufweist, und jeweils einer mit Abstand zu den seitlichen Begrenzungen (7) einwärts zur Ladebodenmittellängsachse hin versetzten Befestigungsschiene, wobei zwischen den Befestigungsschienen in dem Ladeboden zumindest eine Coilmulde (5) vorgesehen ist zur Aufnahme von Coils (6), Spaltbändern (6.1) und dergleichen Ladegut und wobei an den Befestigungsschienen lageveränderlich zur Abstützung des Ladegutes (6, 6.1) zumindest ein sich quer zur Längsmittelachse des Ladebodens 4 erstreckender Stützbalken (12) festlegbar ist, in dem zumindest eine Aufnahme zur Anordnung einer Einsteckrunge (13) vorgesehen ist, die das Ladegut (6, 6.1) an einer Stirnfläche abstützt, und mit zumindest einem flexiblen Spannmittel (17, 19, 20) für das Ladegut (6, 6.1), das an den seitlichen Begrenzungen (8) des Ladebodens (4) festlegbar ist, wobei die Befestigungsschienen als mit Abstand zueinander angeordnete Rasteraufnahmen (10) aufweisende Rasterschienen (9) ausgebildet sind, in denen ein mit Befestigungsansätzen (12.1) versehener Stützbalken (12) lageveränderlich arretierbar ist, **dadurch gekennzeichnet, dass** eine Einsteckrunge (13) des Stützbalkens (12) durch eine Stützstrebe (14) abgestützt ist, die einenends mit der Einsteckrunge (13) und anderenends mit Lageabstand zu dem Stützbalken (12) in Fahrtrichtung des Nutzfahrzeuges gesehen nach vorne hin versetzt in einer der Rasterschienen (9) arretierbar ist, wobei der Stützbalken (12) durch Fixierbolzen in den Rasterschienen (9) befestigbar ist und ein Fixierbolzen mit einem Fixierring (12.2) versehen ist zur Verhinderung des Herausdrehens des Stützbalkens (12) aus der Rasterschiene (9).

2. Nutzfahrzeugaufbau (1) nach Anspruch 1, **dadurch gekennzeichnet, dass** die Einsteckrungen (13) jeweils eine hülsenförmige Aufnahme aufweisen, in die Befestigungsbolzen (14.1) der Stützstreben (14) einsetzbar sind, wobei die Bolzen (14.1) der Stützstreben (14) in Schrägausrichtung zur Längsmittelachse einer Stützstrebe (14) ausgerichtet sind zur Anordnung der Stützstrebe in Diagonalausrichtung gegenüber der aufrecht ausgerichteten Einsteckrunge (13).

3. Nutzfahrzeugaufbau (1) nach Anspruch 1 oder 2, **dadurch gekennzeichnet, dass** an den Stützstreben (14) zumindest ein Profil aufgebracht ist als Anlagefläche für das Ladegut.

4. Nutzfahrzeugaufbau (1) nach Anspruch 3, **dadurch gekennzeichnet, dass** das Profil als Flachstahlprofil ausgebildet ist.

5. Nutzfahrzeugaufbau (1) nach einem der Ansprüche 1 bis 4, **dadurch gekennzeichnet, dass** an jeder Einsteckrunge (13) ein Führungselement (21) zur Anbringung für ein Verzurrmittel (17, 19, 20) des Ladegutes vorgesehen ist.

6. Nutzfahrzeugaufbau (1) nach einem der Ansprüche 1 bis 5, **dadurch gekennzeichnet, dass** an der den Einsteckrungen (13) und dem Stützbalken (12) abgewandten Stirnfläche des Ladegutes (6, 6.1) eine Stütztraverse (16) vorgesehen ist, die an dieser Stirnfläche des Ladegutes (6, 6.1) über ein Zurrmittel (17, 19, 20) mit dem Ladegut verspannt ist.

7. Nutzfahrzeugaufbau (1) nach Anspruch 6, **dadurch gekennzeichnet, dass** das Zurrmittel (17, 19, 20) ausgehend von seiner Befestigung an der Stütztraverse (16) durch ein Auge (15) im Ladegut (6, 6.1) geführt ist in Richtung zu dem Stützbalken (12) und den Einsteckrungen (13) zu einem Verbindungsglied (18), wobei von dem Verbindungsglied (18) ausgehend ein weiteres Verzurrmittel (19) zu einer Seite des Ladebodens (4) und ein anderes Verzurrmittel (20) zu einer anderen Seite des Ladebodens (4) geführt ist und beide weiteren Verzurrmittel (19, 20) um das Ladegut (6, 6.1) herum entgegen die Fahrtrichtung (11) des Nutzfahrzeuges (1) nach hinten in Richtung auf die Stütztraverse (16) zu zu jeweils einer Befestigungsaufnahme (8) der seitlichen Begrenzungen (7) des Ladebodens (4) geführt sind.

8. Nutzfahrzeugaufbau (1) nach Anspruch 7, **dadurch gekennzeichnet, dass** die beiden von dem Verbindungsglied (18) zu den Befestigungsaufnahmen (8) der Begrenzungen (7) des Ladebodens (4) geführten Verzurrmittel (19, 20) durch die Führungselemente (21) an den Einsteckrungen (13) geführt sind.

9. Nutzfahrzeugaufbau (1) nach einem der Ansprüche 1 bis 7, **dadurch gekennzeichnet, dass** zumindest ein Verzurrmittel (17, 19, 20)als Zurrkette ausgebildet ist.

## Claims

1. Commercial vehicle structure (1) having a loading floor (4) which can be supported on the ground via a chassis (2) and which has at its side edges a respective boundary (7) provided with fastening receptacles (8), and a respective fastening rail which is displaced at a distance from the lateral boundary (7) inwards towards the loading floor centre longitudinal axis,
wherein at least one coil trough (5) is provided between the fastening rails in the loading floor for receiving coils (6), slit strips (6.1) and similar load goods and wherein at least one supporting beam (12) extending transversely to the longitudinal centre axis of the loading floor (4) can be fixed to the fastening rails in a positionally variable manner for supporting the load goods (6, 6.1), in which at least one receptacle is provided for the arrangement of an insertion tongue (13) which supports the load goods (6, 6.1) at a front surface,
and having at least one flexible clamping means (17, 19, 20) for the load goods (6, 6.1), which can be fixed to the lateral boundaries (8) of the loading floor (4), wherein the fastening rails are formed as grid rails (9) having grid receptacles (10) arranged at a distance from one another, in which a supporting beam (12) provided with fastening projections (12.1) can be locked in a positionally variable manner,
**characterised in that** an insertion tongue (13) of the supporting beam (12) is supported by a supporting strut (14) which, at one end, can be locked in one of the grid rails (9) with the insertion tongue (13) displaced towards the front, when viewed in the driving direction of the commercial vehicle, and at the other end with a positional spacing from the supporting beam (12), wherein the supporting beam (12) can be fastened in the grid rails (9) by fixing bolts and a fixing bolt is provided with a fixing ring (12.2) for preventing the supporting beam (12) from unscrewing from the grid rail (9).

2. Commercial vehicle structure (1) according to claim 1,
**characterised in that** the insertion tongues (13) respectively have a sleeve-shaped receptacle into which fastening bolts (14.1) of the supporting struts (14) can be inserted, wherein the bolts (14.1) of the supporting struts (14) are aligned in oblique alignment with respect to the longitudinal centre axis of a supporting strut (14) for the arrangement of the supporting strut in diagonal alignment with respect to the upright aligned insertion tongue (13).

3. Commercial vehicle structure (1) according to claim 1 or 2,
**characterised in that** at least one profile is applied to the supporting struts (14) as a bearing surface for the load goods.

4. Commercial vehicle structure (1) according to claim 3,
**characterised in that** the profile is formed as a flat steel profile.

5. Commercial vehicle structure (1) according to any of claims 1 to 4,
**characterised in that** a guide member (21) for attaching a lashing means (17, 19, 20) for the load goods is provided on each insertion tongue (13).

6. Commercial vehicle structure (1) according to any of claims 1 to 5,
**characterised in that** a supporting traverse (16) is provided on the front surface of the load goods (6, 6.1) facing away from the insertion tongues (13) and the supporting beam (12), which is braced to the load goods at this front surface of the load goods (6, 6.1) via a lashing means (17, 19, 20).

7. Commercial vehicle structure (1) according to claim 6,
**characterised in that** the lashing means (17, 19, 20), starting from its fastening to the supporting traverse (16), is guided through an eye (15) in the load goods (6, 6.1) in the direction of the supporting beam (12) and the insertion tongues (13) in the direction of a connecting element (18),
wherein, starting from the connecting element (18), a further lashing means (19) is guided to one side of the loading floor (4) and another lashing means (20) is guided to another side of the loading floor (4), and both further lashing means (19, 20) are guided around the load goods (6, 6.1) against the driving direction (11) of the commercial vehicle (1) to the rear in the direction of the supporting traverse (16) towards a respective fastening receptacle (8) of the lateral boundaries (7) of the loading floor (4).

8. Commercial vehicle structure (1) according to claim 7,
**characterised in that** the two lashing means (19, 20) guided from the connecting element (18) to the fastening receptacles (8) of the boundaries (7) of the loading floor (4) are guided by the guide members (21) on the insertion tongues (13).

9. Commercial vehicle structure (1) according to any of claims 1 to 7,
**characterised in that** at least one lashing means (17, 19, 20) is formed as a lashing chain.

## Revendications

1. Structure de véhicule utilitaire (1) avec un plancher de chargement (4) pouvant être mis en appui sur le sol par l'intermédiaire d'un châssis (2), qui présente sur ses bords latéraux respectivement une délimitation (7) munie de logements de fixation (8), et respectivement un rail de fixation à distance des délimitations latérales (7) décalé vers l'intérieur en direction de l'axe longitudinal central de plancher de chargement, dans laquelle est prévue entre les rails de fixation dans le plancher de chargement au moins une fosse à bobines (5) destinée à recevoir des bobines (6), des feuillards (6.1) et chargement similaire, et dans laquelle une barre de support (12) s'étendant transversalement par rapport à l'axe longitudinal central du plancher de chargement (4) peut être fixée au niveau des rails de fixation dans une position variable à des fins de support du chargement (6, 6.1), dans laquelle barre de support est prévu au moins un logement destiné à la mise en place d'un rancher fixable (13) qui soutient le chargement (6, 6.1) sur sa surface frontale, et avec au moins un moyen de serrage (17, 19, 20) flexible pour le chargement (6, 6.1) qui peut être fixé sur les délimitations latérales (8) du plancher de chargement (4), dans laquelle les rails de fixation sont conçus sous forme de rails de verrouillage (9) présentant des logements de maintien (10) agencés à distance les uns des autres, dans lesquels une barre de support (12) munie de pattes de fixation (12.1) peut être bloquée dans une position variable, **caractérisée en ce qu'**un rancher fixable (13) de la barre de support (12) est soutenu par un montant de support (14) qui peut être bloqué, à une extrémité avec un rancher fixable (13) et à une autre extrémité à une distance de position par rapport à la barre de support (12), vu dans le sens de déplacement du véhicule utilitaire, projeté vers l'avant, dans un des rails de verrouillage (9), dans laquelle la barre de support (12) peut être fixée via des boulons de fixation dans les rails de verrouillage (9) et un boulon de fixation est muni d'une bague de fixation (12.2) destinée à éviter le dévissage de la barre de support (12) hors du rail de verrouillage (9).

2. Structure de véhicule utilitaire (1) selon la revendication 1, **caractérisée en ce que** les ranchers fixables (13) présentent respectivement un logement en forme de douille dans lequel des boulons de fixation (14.1) des montants de support (14) peuvent être utilisés, dans laquelle les boulons (14.1) des montants de support (14) sont orientés dans le sens oblique par rapport à l'axe longitudinal central d'un montant de support (14) en vue de la mise en place du montant de support dans le sens diagonal par rapport au rancher fixable (13) orienté verticalement.

3. Structure de véhicule utilitaire (1) selon la revendication 1 ou 2, **caractérisée en ce qu'**au moins un profilé est posé sur les montants de support (14) en tant que surface d'appui pour le chargement.

4. Structure de véhicule utilitaire (1) selon la revendication 3, **caractérisée en ce que** le profilé est conçu sous forme de profilé en acier plat.

5. Structure de véhicule utilitaire (1) selon l'une des revendications 1 à 4, **caractérisée en ce qu'**au niveau de chaque rancher fixable (13) est prévu un élément de guidage (21) destiné à la fixation d'un moyen d'arrimage (17, 19, 20) du chargement.

6. Structure de véhicule utilitaire (1) selon l'une des revendications 1 à 5, **caractérisée en ce qu'**au niveau de la surface frontale opposée aux ranchers fixables (13) et à la barre de support (12) du chargement (6, 6.1) est prévue une traverse de support (16) qui est serrée avec le chargement sur cette face frontale du chargement (6, 6.1) par un moyen d'arrimage (17, 19, 20).

7. Structure de véhicule utilitaire (1) selon la revendication 6, **caractérisée en ce que** le moyen d'arrimage (17, 19, 20) à partir de sa fixation sur la traverse de support (16) est guidé à travers un œil (15) dans le chargement (6, 6.1) en direction de la barre de support (12) et des ranchers fixables (13) vers un élément de liaison (18), dans laquelle à partir de l'élément de liaison (18) un autre élément d'arrimage (19) est guidé vers une face du plancher de chargement (4) et un autre moyen d'arrimage (20) est guidé vers une autre face du plancher de chargement (4) et les deux autres moyens d'arrimage (19, 20) entourant le chargement (6, 6.1) dans le sens opposé au sens de déplacement (11) du véhicule utilitaire (1) sont guidés vers l'arrière en direction de la traverse de support (16) vers respectivement un logement de fixation (8) des délimitations latérales (7) du plancher de chargement (4).

8. Structure de véhicule utilitaire (1) selon la revendication 7, **caractérisée en ce que** les deux moyens d'arrimage (19, 20), menés de l'élément de liaison (18) aux logements de fixation (8) des délimitations (7) du plancher de chargement (4), sont guidés à travers les éléments de guidage (21) sur les ranchers fixables (13).

9. Structure de véhicule utilitaire (1) selon l'une des revendications 1 à 7, **caractérisée en ce qu'au** moins un moyen d'arrimage (17, 19, 20) est conçu sous forme de chaîne d'arrimage.
